# EUROPÄISCHE PATENTSCHRIFT

(11) **EP 3 759 777 B1**
(45) Veröffentlichungstag und Bekanntmachung des Hinweises auf die Patenterteilung: **07.06.2023**
(21) Anmeldenummer: 19720400.1
(22) Anmeldetag: 09.04.2019
(51) Int. Cl.: H02B 13/025

(54) **SCHALTSCHRANK**
SWITCHPANEL
ARMOIRE DE COMMUTATION

(30) Priorität: 27.04.2018 DE 102018206577
(43) Veröffentlichungstag der Anmeldung: 06.01.2021
(73) Patentinhaber: Siemens Energy Global GmbH & Co. KG, 81739 München (DE)
(72) Erfinder: BRADLER, Christian, 14612 Berlin (DE); FEDTKE, Tom, 10969 Berlin (DE); ROSE-PÖTZSCH, Alexander, 16341 Panketal (DE); WAHLE, Arno, 14612 Falkensee (DE); HABERER, Tommy, 10369 Berlin (DE)
(86) Internationale Anmeldenummer: PCT/EP2019/058902
(87) Internationale Veröffentlichungsnummer: WO 2019/206617

(56) Entgegenhaltungen:
- EP-A1- 0 903 826
- DE-A1- 4 141 685
- DE-B3- 10 313 723
- DE-U1- 8 312 297
- DE-U1- 29 509 361

## Beschreibung

Die Erfindung bezieht sich auf einen Schaltschrank mit einem Druckentlastungskanal zur Abführung eines Fluidstromes sowie mit einem im Druckentlastungskanal angeordneten Diffusor.

Ein Schaltschrank ist bspw. aus der Übersetzung der europäischen Patentschrift DE 600 03 758 T2 bekannt. Der dortige Schaltschrank weist einen Druckentlastungskanal auf, in dessen Verlauf ein Diffusor angeordnet ist. Der bekannte Diffusor ist schwenkbar angeordnet, so dass im Falle eines erhöhten Aufkommens an Fluidströmung ein vergrößerter Querschnitt zum raschen Ausströmen des Fluidstromes zur Verfügung steht. Nachteilig ist, dass bei einem Ausschwenken des Diffusors die Wirkung des Diffusors, nämlich ein Zerstreuen eines Fluidstromes nicht mehr gegeben ist. Jedoch ist insbesondere beim Auftreten von großen Mengen an Fluidströmung eine Zerstreuung erwünscht.

Aus der DE 295 09 361 U1 ist eine Abdeckung von Hochspannungsräumen für Mittelspannungs-Schaltanlagen, insbesondere Schaltfelder, bekannt, deren Belüftungssicken mit gleichmäßigen Durchbrüchen eines Steckmetalls zusammengefügt sind und die eine hohe Elastizität aufweist.

Aus der DE 41 41 685 A1 ist eine Schaltanlage für Mittel- oder Hochspannung bekannt, deren Gehäuse in einem Wandabschnitt einen Durchbruch aufweist. Dieser Durchbruch ist zur intensiven Kühlung ausströmender heißer Gase mit wenigstens zwei Lagen eines Streckmetallgitters abgedeckt, wobei wenigstens eine Lage gewellt, mäanderförmig oder dachförmig im Zick-Zack gefaltet ist.

Aus der DE 83 12 297 U1 ist eine Ventilanordnung für eine gekapselte elektrische Schaltanlage bekannt, bei der im Normalbetrieb Kühlluft durch ein Ventilationsgitter in das Kapselungsgehäuse gelangen kann und bei Auftreten störungsbedingter Lichtbögen in dem Kapselungsgehäuse die Lufteintrittsöffnung selbsttätig geschlossen wird. Das Ventilationsgitter weist mehrere nebeneinander angeordnete, rechteckige Lufteintrittsöffnungen auf, vor denen ein feinmaschiges Messingnetz fixiert ist. Auftretender Überdruck wird aus dem Schrank abgeleitet, indem das Dachblech angehoben wird, ohne fortgeschleudert zu werden.

Aus der DE 103 13 723 B3 ist eine Baueinheit für die Aufnahme eines Elementes für die Absorption oder Dämpfung austretender heißer Gase, verursacht durch einen Lichtbogen in elektrischen Funktionseinheiten der Hoch- und Mittelspannung, bekannt, bei der ein Absorptionselement in einer Kammer angeordnet ist und aus einem monolithischen Keramikkörper besteht, durch dessen Kanäle die Gase strömen.

Aus der EP 0 903 826 A1 ist für ein Mittelspannungs- Schaltfeld eine Feuer-löschende Einrichtung bekannt, bei der die mit Auftreten eines Lichtbogens erzeugten Rauchgase durch einen Stapel von Drahtnetzen, die zwischen zwei Lochplatten angeordnet sind und die eine niedrige thermische Trägheit aufweisen, geführt werden.

Somit ergibt sich als Aufgabe der Erfindung, einen Diffusor, der in einem Druckentlastungskanal zur Abführung eines Fluidstromes aus einem Schaltschrank angeordnet ist, derart weiterzubilden, dass eine Querkomponente auf den Fluidstrom aufgeprägt wird.

Die Aufgabe wird erfindungsgemäß bei einem Schaltschrank der eingangs genannten Art mit den Merkmalen des Anspruchs 1 gelöst.

Ein Schaltschrank wird in Elektroenergieübertragungs- und Verteilvorrichtungen eingesetzt, um elektrische Einrichtungen aufzunehmen und vor einem äußeren Zugriff zu schützen. Als solches sind in einem Schaltschrank beispielsweise elektrische Leitungen und Kabel, Mess- und Steuergeräte, Schaltschütze, Relais usw. angeordnet. Ein Schaltschrank umgibt dabei einen Raum, welcher als so genannter Elektroraum der Aufnahme der einzuhausenden elektrischen Einrichtungen dient. Der Schaltschrank kann als solches den Elektroraum hermetisch einhausen. In diesem Falle ist das Innere (Elektroraum) vollständig hermetisch gegenüber der Umgebung des Schaltschrankes abgeschlossen. In diesem Falle spricht man von einer Kapselung, einem Kapselungsgehäuse usw. Das Innere eines hermetisch abgeschlossenen Schaltschrankes kann unter Betriebsbedingungen bereits einen Überdruck aufweisen. Im Allgemeinen dienen Schaltschränke einem Berührungsschutz, so dass ein Hindurchströmen von Fluiden in das Innere des Schaltschrankes hinein bzw. aus dem Inneren des Schaltschrankes hinaus in begrenztem Maße möglich ist. Unabhängig davon besteht die Möglichkeit, dass im Inneren des Schaltschrankes kurzfristig große Fluidvolumina entstehen, die abgeführt werden müssen, um eine Beschädigung des Schaltschrankes zu vermeiden. Als solches ist in einer Wandung des Schaltschrankes üblicherweise eine Druckentlastungseinrichtung angeordnet, die im Allgemeinen einem Eröffnen einer Druckentlastungsöffnung (Ausströmöffnung) dient. Beispielsweise können Berstplatten, Klappen, Ventile oder andere insbesondere differenzdruckabhängig gesteuerte Elemente Teile einer Druckentlastungseinrichtung sein. Je nach Ausgestaltung des Schaltschrankes kann eine Druckentlastungseinrichtung einen hermetischen Verschluss oder eine nichthermetische Verdämmung bewirken.

Ein Druckentlastungskanal dient einer Leitung des Fluidstromes zu einer Druckentlastungseinrichtung oder gegebenenfalls unmittelbar zu einer Druckentlastungsöffnung, bspw. eine Öffnung, die lediglich durch ein grobmaschiges Gitter vor direktem Zugang geschützt ist, so dass ein Fluidstrom, welcher über den Druckentlastungskanal ausgeleitet werden soll, in die Umgebung des Schaltschrankes entlassen werden kann. Im Falle eines hermetisch abgeschlossenen Schaltschrankes ist der Druckentlastungskanal ebenfalls hermetisch zu verschließen. Eine Freigabe des Druckentlastungskanals kann durch eine Druckentlastungseinrichtung gesteuert sein. Der Druckentlastungskanal ist also ein Kanal, in welchem ein strömendes Fluid geleitet und gelenkt wird. Ein Druckentlastungskanal kann beispielsweise durch Teile des Elektroraumes des Schaltschrankes gebildet sein. Beispielsweise kann sich ein Druckentlastungskanal oberhalb von elektrischen Einrichtungen im Elektroraum erstrecken bzw. elektrische Einrichtungen können auch unmittelbar in dem Druckentlastungskanal angeordnet sein, um eine besonders effektive Abführung von strömenden Fluiden von den Elektroeinrichtungen zu erzielen.

Ein Fluidstrom kann beispielsweise durch einen elektrischen Fehler im Inneren des Schaltschrankes, insbesondere im Elektroraum, erzeugt werden. Ein elektrischer Fehler ist beispielsweise ein Versagen einer elektrischen Isolation, wodurch es zu Lichtbogenerscheinungen kommen kann. Beispielsweise können an Kabeln oder Leitungen infolge von Überspannungen oder Alterungen von Isoliermaterial Kurzschlüsse oder Erdschlüsse auftreten. Die dabei freigesetzten Energiemengen treten innerhalb von kurzen Zeitintervallen auf, wodurch auch ein Expandieren von im Schaltschrank befindlichen Fluiden wie beispielsweise Isoliergasen, zum Beispiel atmosphärischer Luft, auftreten kann. Weiter können Plasmawolken auftreten, die bei einem Verdampfen von Isolierwerkstoffen oder Leiterwerkstoffen entstehen. Entsprechend kann der Fluidstrom mit Partikeln angereichert sein, welche ebenso wie das unter einem erhöhten Druck befindliche Fluid aus dem Inneren des Schaltschrankes in unkritische Bereiche der Umgebung des Schaltschrankes abgeführt werden sollen. Dazu dient der Druckentlastungskanal, welcher den Fluidstrom schlussendlich durch eine Druckentlastungsöffnung in die Umgebung des Schaltschrankes abgibt.

Mittels eines Diffusors ist es möglich, die im Regelfalle punktuell in einer kleinen Zone auftretende Generierung von abzuführendem Fluid zu vergleichmäßigen, das Fluid zu kühlen, das Fluid zu streuen usw. und so den Schaden, welcher durch die Fluidströmung angerichtet werden kann, zu begrenzen. Mittels der Fluidströmung sind so weiterhin auch ein Abbremsen und ein Abkühlen von im Fluidstrom enthaltenden Partikeln ermöglicht. Durch die Verwendung einer mechanisch stabilisierenden Grundplatte mit mehreren ersten Öffnungen an einem Diffusor ist eine Struktur gegeben, welche auch sprungartig auftretenden Druckbeeinflussungen widerstehen kann. Die Öffnungen sind dabei geeignet, den Fluidstrom zu kühlen, zu verteilen und durch eine Vielzahl erster Öffnungen hindurchtreten zu lassen. Die mechanisch stabilisierende Grundplatte kann beispielsweise aus einander kreuzendenden Streifen/Streben etc. gebildet werden, so dass eine winkelstarre, im Wesentlichen ebene, Grundplatte gebildet ist. Beispielsweise können mehrere Streifen miteinander verwoben, vernietet, verschweißt usw. sein. Je nach Winkellage und Streifenbreite können unterschiedliche Querschnitte für die Öffnungen realisiert werden, bspw. können die ersten Öffnungen rechteckig, quadratisch, rautenförmig ausgebildet sein. Die Grundplatte kann aus mehreren Teilen zu einem winkelstarren Verbund zusammengefügt sein. Dabei kann die Grundplatte dazu vorgesehen sein, den Diffusor mechanisch an Wandungen des Druckentlastungskanals bzw. des Schaltschrankes abzustützen, beispielsweise kann die Grundplatte sich im Wesentlichen quer zum Druckentlastungskanal erstrecken, wobei die Grundplatte im eingebauten Zustand den Querschnitt des Druckentlastungskanals überspannt, so dass der Diffusor nach Art einer Membran eine Barriere zwischen den Wandflächen, welche den Druckentlastungskanal begrenzen, aufspannt. In einer bevorzugten Variante können die ersten Öffnungen kreisrunde Öffnungen sein, welche auf Linien verteilt angeordnet sind, wobei auf benachbarten Linien die ersten Öffnungen zueinander versetzt sind. Aufgrund der sich so einstellenden zickzackartigen Sprünge im Verlauf der Stege zwischen den ersten Öffnungen sind die Kühlwirkung und die Streuwirkung der Stege der Grundplatte besonders wirksam. Dabei kann vorgesehen sein, dass die Grundplatte beispielsweise durch Verschraubungen mit Wandungen verbunden ist. Dazu kann die Grundplatte beispielsweise abgwinkelte Laschen aufweisen, die mit entsprechenden Ausnehmungen zum Befestigen des Diffusors ausgestattet sind. Die Laschen können dabei im Wesentlichen parallel in Richtung des durch den Diffusor durchzuleitenden Fuidstromes ausgerichtet sein, so dass sich die Ausnehmungen (z. B. für Schrauben, Bolzen, Niete) im Wesentlichen quer zur Durchtrittsrichtung erstrecken.

Durch eine Stabilisierung des Diffusors mittels der Grundplatte ist die Möglichkeit gegeben, ein Maschenwerk über den ersten Öffnungen aufzuspannen, wobei das Maschenwerk zweite Öffnungen aufweist. Dabei ist das Größenverhältnis der ersten Öffnungen und zweiten Öffnungen vorteilhaft derart gewählt, dass die zweiten Öffnungen des Maschenwerkes einen geringeren Querschnitt aufweisen als die ersten Öffnungen. Bevorzugt können die Querschnitte von erster Öffnung und zweiter Öffnung zusätzlich in ihrer Form unterschiedlich sein. Bevorzugt kann eine erste Öffnung durch mehrere zweite Öffnungen überspannt sein. Vorteilhafterweise sind die zweiten Öffnungen durch sogenanntes Streckmetall gebildet, das heißt, durch ein Stanzen und Ziehen einzelner Stege einer Platte wird ein Maschenwerk mit z. B. rautenförmiger Struktur gebildet, welches verkippt zueinander liegende Stege zwischen den einzelnen zweiten Öffnungen des Maschenwerkes aufweist. Aufgrund des Fertigungsverfahrens sind so kantige Stege gebildet, die einer besonders effizienten Verwirbelung und Abkühlung insbesondere durch eine entsprechende Oberflächenvergrößerung am Maschenwerk des Diffusors ermöglichen. Vorteilhaft sind das Maschenwerk sowie die Grundplatte im Wesentlichen parallel zueinander ausgerichtet, so dass die zweiten Öffnungen des Maschenwerkes vor den ersten Öffnungen liegen. Bevorzugt können die zweiten Öffnungen beabstandet zu den ersten Öffnungen angeordnet sein. Dadurch kann die Kühl- und Richt- und Wirbelwirkung des Diffusors zusätzlich verstärk werden. Die ersten Öffnungen können einem Verwirbeln des Fluidstromes dienen, wohingegen die zweiten Öffnungen mit dem Maschenwerk eine zusätzliche Kühlung des Fluidstromes bewirken. Das Maschenwerk wird dabei zumindest teilweise von der Grundplatte bzw. durch die Grundplatte stabilisiert und gestützt.

Eine vorteilhafte Ausgestaltung kann vorsehen, dass in Durchtrittsrichtung des Diffusors die zweiten Öffnungen vor den ersten Öffnungen liegen.

Der Diffusor kann einem Fluidstrom ausgesetzt werden, wobei der Fluidstrom durch den Druckentlastungskanal in Richtung einer Druckentlastungsöffnung geleitet ist. Dieser Fluidstrom in Richtung der Druckentlastungsöffnung wird als Durchtrittsrichtung des Diffusors beschrieben. Bei einem Beströmen des Diffusors mit dem Fluidstrom werden zunächst die zweiten Öffnungen und anschließend die ersten Öffnungen von dem Fluidstrom durchsetzt. Somit wird bereits an den ersten Öffnungen ein Kühlen des Fluidstromes bewirkt. Zusätzlich weist diese Anordnung den Vorteil auf, dass bspw. im Fluidstrom enthaltene Partikel mit einer größeren Wahrscheinlichkeit mit den Wandungen des Maschenwerkes kollidieren und eine Kühlung bzw. eine Abbremsung der Partikel bewirken.

Eine weitere vorteilhafte Ausgestaltung kann vorsehen, dass das Maschenwerk zumindest eine Kavität über der Grundplatte begrenzend geprägt ist.

Das Maschenwerk ist bevorzugt zumindest abschnittsweise beabstandet zur stabilisierenden Grundplatte angeordnet. Dadurch ist bei einem Hindurchtreten eines Fluidstromes zwischen den zweiten Öffnungen und den ersten Öffnungen eine Beruhigungszone gebildet, innerhalb welcher verwirbeltes Fluid entspannt wird, um dann wiederum in einer folgenden Öffnung einer erneuten Verwirbelung alternativer Form unterworfen zu werden. Durch ein Prägen des Maschenwerkes, das heißt, über der Fläche der Grundplatte werden die zweiten Öffnungen zumindest teilweise beabstandet und mit unterschiedlichen Distanzen zur Grundplatte ausgerichtet, kann je nach Gestaltung der Kavität eine zusätzliche Profilierung des Entspannungsraumes zwischen der Grundplatte sowie dem Maschenwerk erzielt werden. Beispielsweise kann das Maschenwerk kuppelförmig, trapezförmig, gesickt, rechtwinklig abgekantet, gemuldet oder wellenförmig geprägt sein, wodurch über der Grundplatte verschieden wirkende Verwirbelungen bei einem Durchtritt eines Fluidstromes durch die zweiten Öffnungen auftreten. Beispielsweise kann ein streifenförmiges welliges Prägen des Maschenwerkes vorgesehen sein. Die Kavität erstreckt sich dabei zwischen der Grundplatte und dem jeweils überspannenden Abschnitt des Maschenwerkes.

Das Maschenwerk kann beispielsweise eigenstabil ausgebildet sein, so dass dieses auch durch ein Umformen eigenstabil aufgespannt werden kann.

Vorteilhaft kann vorgesehen sein, dass die Prägung eine Sägezahnprägung ist.

Durch eine Sägezahnprägung wird im Maschenwerk eine Vielzahl von zur Grundplatte gekippten Zonen im Maschenwerk erzeugt. Dabei wird durch den Sägezahn eine pultartige Prägung aufgebracht, die sich alternierend wiederholt über der Grundplatte verteilt. Insbesondere durch die pultartige Verkippung einzelner Flächen des Maschenwerkes wird so das Hindurchtreten eines Fluidstromes durch den Diffusor zusätzlich beeinflusst. Je nach Anordnung des Diffusors können gekippte Zonen unterschiedlich von dem Fluidstrom angeströmt werden. Die Sägezahnprägung kann symmetrisch (zickzack) oder asymmetrisch (verkippt) ausgeführt sein.

Erfindungsgemäß ist vorgesehen, dass eine erste Gruppe von zweiten Öffnungen im Wesentlichen quer und eine zweite Gruppe von zweiten Öffnungen im Wesentlichen parallel in Durchtrittsrichtung des Diffusors angeordnet sind.

Dabei sind die zweiten Öffnungen des Maschenwerkes in unterschiedlichen Winkellagen bezüglich der Durchtrittsrichtung des Fluidstromes angeordnet. Insbesondere bei einer sich wiederholenden Profilierung (z. B. Sägezahnprofil) des Maschenwerkes des Diffusors sind so eine erste Gruppe sowie eine zweite Gruppe von Öffnungen gebildet, wobei die erste Gruppe im Wesentlichen quer und die zweite Gruppe im Wesentlichen parallel in Durchtrittsrichtung des Diffusors angeordnet ist. Die erste Gruppe von zweiten Öffnungen kann relativ leicht mit einer begrenzten Verwirbelung von einem Fluidstrom durchsetzt werden, wohingegen die zweite Gruppe von zweiten Öffnungen aufgrund ihrer Parallelorientierung eine stärkere Verwirbelung des Fluidstromes bewirkt. Insbesondere bei einer Verwendung eines Streckmaterials für das Maschenwerk kann so ein Verwirbeln bzw. eine Querkomponente auf den Fluidstrom durch die zweite Gruppe von zweiten Öffnungen aufgeprägt werden.

Insbesondere bei Nutzung einer Sägezahnprägung bzw. einer pultartigen Anordnung einzelner Abschnitte des Maschenwerkes können so unterschiedliche Durchströmungen der Öffnungen erzielt werden.

Eine weitere vorteilhafte Ausgestaltung kann vorsehen, dass die Grundplatte im Wesentlichen schräg zur Durchtrittsrichtung angeordnet ist.

Die Grundplatte oder auch der gesamte Diffusor können im Wesentlichen schräg zur Durchtrittsrichtung des Fluidstromes ausgerichtet sein. Dadurch kann insbesondere bei einer Profilierung des Maschenwerkes ein unterschiedliches Anströmen bzw. Durchströmen verschiedener Gruppen von zweiten Öffnungen erzielt werden. Insbesondere bei einer sägezahnartigen Profilierung des Maschenwerkes bzw. einem pultartigen Verkippen des Maschenwerkes können so unterschiedliche Gruppen der zweiten Öffnungen gebildet werden, die unterschiedlich gegenüber der Durchtrittsrichtung orientiert sind. Weiter kann durch eine schräge Anordnung die zum Beeinflussen des Fluidstromes zur Verfügung stehende Fläche am Diffusor innerhalb eines Druckentlastungskanals vergrößert werden.

Eine weitere vorteilhafte Ausgestaltung kann vorsehen, dass der Diffusor, eine Richtungsänderung des Fluidstromes unterstützend, in einem Umlenkknie angeordnet ist.

Je nach räumlichen Verhältnissen ist es notwendig, den Druckentlastungskanal verschiedenartig verlaufen zu lassen. In einem einfachen Fall kann der Druckentlastungskanal (Ausströmkanal) im Wesentlichen einem linearen Verlauf folgen. Bedarfsweise ist jedoch eine Richtungsänderung im Verlauf des Druckentlastungskanals vorzusehen. Eine derartige Richtungsänderung des Fluidstromes kann durch ein Umlenkknie des Druckentlastungskanals bewirkt werden. Ordnet man nunmehr einen oder mehrere Diffusoren innerhalb des Umlenkknies an, kann durch eine einerseits vorzunehmende Verwirbelung des Fluidstromes auch der verwirbelte Fluidstrom in die bevorzugte Ausströmrichtung des Umlenkknies hineingezwungen werden. Mittels eines Umlenkknies kann beispielsweise eine Richtungsänderung um 90°, um 45° usw. erzeugt werden.

Eine weiter vorteilhafte Ausgestaltung kann vorsehen, dass zumindest ein Diffusor in einem Abschnitt eines Druckentlastungskanals angeordnet ist, der nach Art eines Erkers an einen Schaltschrank angesetzt ist.

Ein Druckentlastungskanal ist bevorzugt modular aufzubauen, d. h. aus mehreren Grundelementen ist der notwendige Verlauf des Druckentlastungskanals zusammenstellbar. Dabei kann vorteilhaft vorgesehen sein, dass an einer Wandung des Schaltschrankes ein Abschnitt nach Art eines Erkers angesetzt wird, wobei innerhalb des Abschnittes zumindest ein Diffusor angeordnet ist. Somit ist es beispielsweise möglich, die Verwendung von quaderförmigen Grundelementen vorzusehen, an deren Mantelfläche sich eine Ausbauchung durch den Abschnitt in Form eines Erkers darstellt. Der Erker kann beispielsweise auch dazu dienen, eine Druckentlastungsöffnung bereitzustellen. Dadurch kann eine Wegverlängerung im Verlauf des Druckentlastungskanals erzielt werden.

Eine weitere vorteilhafte Ausgestaltung kann vorsehen, dass eine Druckentlastungsöffnung des Druckentlastungskanals den Fluidstrom in eine Vertikale lenkt.

Vorteilhaft erfolgt ein Ausblasen des Fluidstromes in Richtung einer Vertikalen, so dass Partikel nicht in unmittelbar benachbarte Bereiche des Schaltschrankes ausgestoßen werden. Dabei kann vorgesehen sein, dass die Druckentlastungsöffnung beispielsweise durch eine Druckentlastungseinrichtung (hermetisch/nicht hermetisch) abgeschlossen ist. Nach einem Austreten des Fluidstromes aus der Druckentlastungsöffnung kann dieser sich frei entfalten.

Bedarfsweise kann im Verlauf des Druckentlastungskanals auch eine Anordnung von mehreren Diffusoren vorgesehen sein, so dass eine Kaskade von Diffusoren entsteht. Dabei kann vorgesehen sein, dass die Diffusoren einen gleichartigen Aufbau aufweisen. Es kann jedoch auch vorgesehen, dass die Diffusoren vom gleichen Aufbautyp sind, jedoch in der Wahl des Maschenwerkes sowie der Grundplatte sowie der dort angeordneten ersten und zweiten Öffnungen variiert.

Im Folgenden wird ein Ausführungsbeispiel der Erfindung schematisch in einer Zeichnung gezeigt und nachfolgend näher beschrieben. Dabei zeigt die
- Figur 1:: eine perspektivische Ansicht einer Elektroenergieübertragungseinrichtung mit teilweisen Freischneidungen; die
- Figur 2:: eine perspektivische Ansicht eines Diffusors; die
- Figur 3:: eine erste Einbausituation eines Diffusors, wie aus den Figuren 1 und 2 bekannt; die
- Figur 4:: eine zweite Einbausituation eines Diffusors, wie aus den Figuren 1 und 2 bekannt.

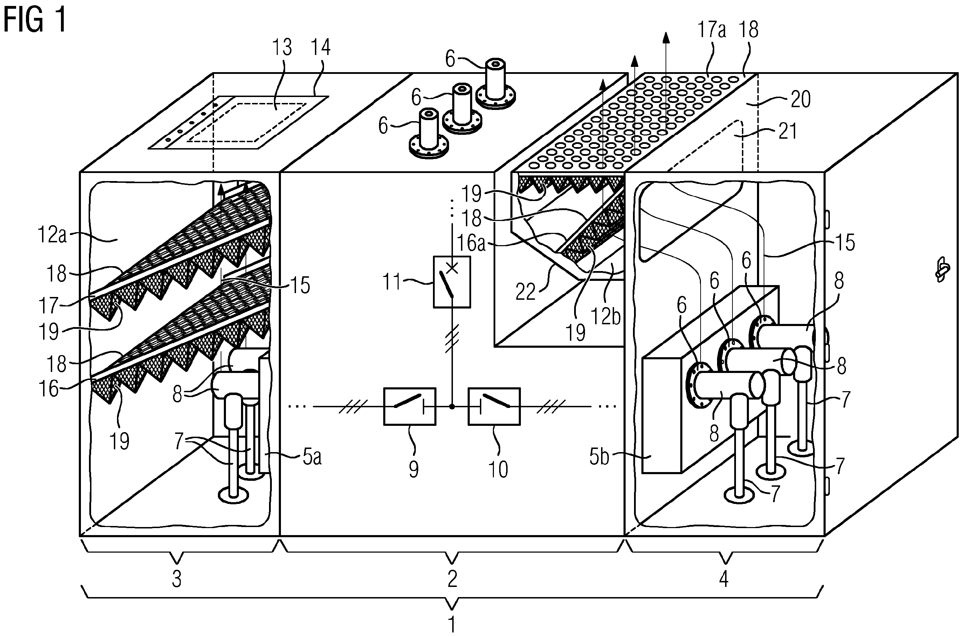

Die Figur 1 zeigt eine Elektroenergieübertragungseinrichtung mit einem gasisolierten Schaltfeld 1. Das gasisolierte Schaltfeld 1 ist mit einem Kapselungsgehäuse 2 ausgestattet. Das Kapselungsgehäuse 2 bildet eine fluiddichte Barriere um einen Innenraum des Schaltfeldes 1. Der Innenraum (Elektroraum) kann mit einem elektrisch isolierenden Gas unter Überdruck befüllt werden, da ein Verflüchtigen des elektrisch isolierenden Fluides durch das hermetisch dichtende Kapselungsgehäuse 2 verhindert ist. Das Kapselungsgehäuse 2 ist dabei im Wesentlichen aus elektrisch leitenden Materialien gebildet, wobei Durchführungen (vgl. weitere Ausführungen) zur Einführung von Phasenleitern Wandungen des Kapselungsgehäuses 2 des Schaltfeldes 1 passieren. Das Innere des Kapselungsgehäuses 2 ist mit Phasenleitern und Schalteinrichtungen befüllt, welche durch ein im Innern des Kapselungsgehäuses 2 hermetisch abgeschlossenes, gegebenenfalls unter Überdruck stehendes elektrisch isolierendes Gas elektrisch isoliert sind. Das Kapselungsgehäuse 2 bildet so einen hermetisch geschlossenen Schaltschrank.

An zwei entgegengesetzt zueinander ausgerichteten Seiten des Kapselungsgehäuses 2 sind ein erster Schaltschrank 3 sowie ein zweiter Schaltschrank 4 angeordnet. Die beiden Schaltschränke 3, 4 sind vorliegend derart ausgebildet, dass sie jeweils einen Elektroraum (Innenraum) begrenzen, innerhalb welchem Elektroeinrichtungen untergebracht sind. Abweichend zum Elektroraum des Kapselungsgehäuses 2 sind die Elektroräume der beiden Schaltschränke 3, 4 mit atmosphärischer Luft befüllt. Im Innern (Elektroraum) der Schaltschränke 3, 4 angeordnetes Fluid kann über entsprechende Spalten und Öffnungen im Gehäuse mit der Umgebung kommunizieren. Es kann jedoch auch vorgesehen sein, dass analog zur Ausbildung des Kapselungsgehäuses 2 des Schaltfeldes 1 eine fluiddichte Ausbildung der Schaltschränke 3, 4 vorgenommen wird. Die folgenden Ausführungen sind dann entsprechend anzupassen. In das Innere des ersten Schaltschrankes 3 sowie des zweiten Schaltschrankes 4 ragen jeweils Anschlussflächen 5a, 5b hinein. Die Anschlussflächen 5a, 5b sind durch Anformungen des Kapselungsgehäuses 2 gebildet. In den Anschlussflächen 5a, 5b sind Steckverbinder 6 angeordnet, welche als Durchführungen dienen, um Kabel 7 mittels Kabelsteckern 8 zu kontaktieren und die Phasenleiter der Kabel 7 in das Innere (Elektroraum) des Kapselungsgehäuses 2 hinein zu verbringen. Neben den Steckverbindern 6, welche die Anschlussflächen 5a, 5b innerhalb des ersten bzw. zweiten Schaltschrankes 3, 4 durchsetzen, sind am Kapselungsgehäuse 2, nämlich in einer Deckfläche, weitere Steckverbinder 6 angeordnet. In der Figur 1 sind die weiteren Steckverbinder 6 in der Deckfläche frei von Kabelsteckern 8 oder Kabeln 7. Über die in den Anschlussflächen 5a, 5b befindlichen Steckverbinder 6 sind Phasenleiter der dort ansteckbaren Kabel 7 in das Innere des Kapselungsgehäuse s 2 elektrisch isoliert einführbar. Im Innern des Kapselungsgehäuses 2 ist eine elektrisch leitende Verbindung zwischen den Steckverbindern 6 der beiden Anschlussflächen 5a, 5b gegeben. Um ein Auftrennen der elektrisch leitenden Verbindung zwischen den Steckverbindern 6 der beiden Anschlussflächen 5a, 5b zu ermöglichen, sind ein erster Trennschalter 9 sowie ein zweiter Trennschalter 10 in der elektrisch leitenden Verbindung zwischen den Steckverbindern 6 der beiden Anschlussflächen 5a, 5b angeordnet. Mittels der beiden Trennschalter 9, 10 kann so die elektrisch leitende Verbindung aufgetrennt und geschlossen werden. Damit ist es möglich, die Kabel 7, welche an den Steckverbindern 6 der Anschlussflächen 5a, 5b angeschlossen sind, durch das Kapselungsgehäuse 2 bzw. das Schaltfeld 1 hindurchzuschleifen. An den einander zugewandten Enden der beiden Trennschalter 9, 10 ist eine Stichleitung angeordnet. In der Stichleitung ist ein Leistungsschalter 11 befindlich, welcher seinerseits mit den weiteren Steckverbindern 6, die in der Deckfläche des Kapselungsgehäuses 2 befindlich sind, elektrisch kontaktiert ist. Über die weiteren Steckverbinder 6 in der Deckfläche des Kapselungsgehäuses 2 kann ein Kabel in analoger Weise wie an den anderen Steckverbindern 6 gezeigt, angeschlossen werden, so dass hier eine Stichleitung aus dem Schaltfeld 1 herausgeführt werden kann. Somit ist es möglich, über das Schaltfeld 1 ein Kabel durch das Kapselungsgehäuse 2 hindurchzuschleifen und eine Stichleitung abzuzweigen, um einen Abnehmer oder einen Einspeiser an das durchgeschleifte Kabel anzuschließen.

Um in einem Fehlerfalle innerhalb der beiden Schaltschränke 3, 4 und einer gegebenenfalls damit verbundenen Expansion von Fluiden, insbesondere von Gasen eine undefinierte Zerstörung der Schaltschränke 3, 4 zu verhindern, sind die beiden Schaltschränke 3, 4 jeweils mit einem Druckentlastungskanal 12a, 12b ausgerüstet. Die Druckentlastungskanäle 12a, 12b kommunizieren jeweils mit dem Elektroraum des jeweiligen Schaltschrankes 3, 4 bzw. sind durch Teile des Elektroraumes des jeweiligen Schaltschrankes 3, 4 gebildet. Zunächst soll das Druckentlastungskonzept des ersten Schaltschrankes 3 beschrieben werden.

Der erste Schaltschrank 3 weist in einer Deckfläche eine Druckentlastungsöffnung 13 (Ausströmöffnung) auf. Die Druckentlastungsöffnung 13 ist mit einer Klappe 14 verdämmt. Die Klappe 14 liegt am Randbereich der Druckentlastungsöffnung 13 an. Im Falle eines Überdruckes im Innern des ersten Schaltschrankes 3 kommt es zu einer Druckerhöhung und getrieben durch die Druckerhöhung und die Druckdifferenz zwischen dem Innern des ersten Schaltschrankes 3 sowie dem Äußeren des ersten Schaltschrankes 3 wird die Klappe 14 geöffnet. Dazu kann die Klappe 14 beispielsweise eine Biegekante aufweisen. In diesem Falle hebt die Klappe 14 von ihrem Anlagebereich an der Wandung des ersten Schaltschrankes 3 ab und gibt die Druckentlastungsöffnung 13 frei. Zwischen der Druckentlastungsöffnung 13 sowie der potenziellen Quelle eines Fehlers, z. B. einem Kabel 7, einem Kabelstecker 8 oder einem Steckverbinder 6 ist ein Druckentlastungskanal 12a angeordnet. Der Druckentlastungskanal 12a verbindet einen potenziellen Fehlerort (z. B. Kabel 7, Kabelstecker 8, Steckverbinder 6) mit der Umgebung (Druckentlastungsöffnung 13) und gibt einen Abzugsweg für einen Fluidstrom 15 vor. Bei Verwendung eines hermetisch geschlossenen Schaltschrankes ist die Druckentlastungsöffnung 13 hermetisch zu verschließen und im Fehlerfall zu öffnen.

Im Druckentlastungskanal 12a des ersten Schaltschrankes 3 sind ein erster Diffusor 16 sowie ein zweiter Diffusor 17 angeordnet. Der erste und der zweite Diffusor 16, 17 sind dabei im Wesentlichen quer zum vorgesehenen Fluidstrom 15 ausgerichtet, wobei zur Vergrößerung der Durchtrittsfläche am jeweiligen Diffusor 16 eine Verkippung der beiden Diffusoren 16, 17 zur Durchtrittsrichtung des Fluidstromes 15 vorgesehen ist. Die Diffusoren 16, 17 sind im Wesentlichen parallel zueinander ausgerichtet.

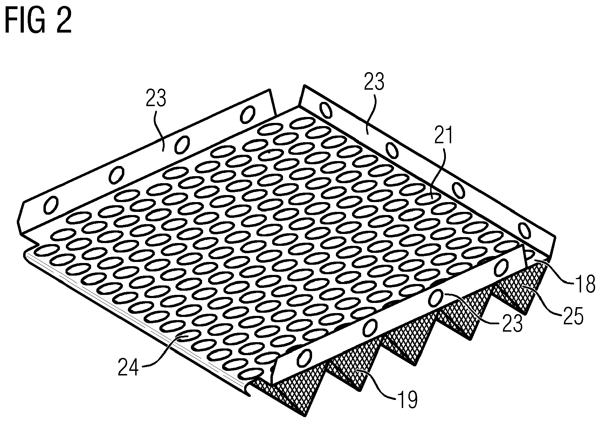

Die Diffusoren 16, 17 sind mit einer Grundplatte 18 ausgestattet, durch welche die Diffusoren 16, 17 mechanische Stabilität erlangen. Die Grundplatten 18 sind jeweils mit ihren Körperkanten bündig in den rechteckigen Querschnitt des Druckentlastungskanals 12a des ersten Schaltschrankes 3 eingesetzt. In Durchtrittsrichtung jeweils vor den Grundplatten 18 des ersten bzw. zweiten Diffosors 17 ist jeweils ein Maschenwerk 19 angeordnet. Das Maschenwerk 19 weist eine Prägung auf, so dass zwischen dem Maschenwerk 19 sowie der jeweiligen Grundplatte 18 eine Kavität eingeschlossen ist. Der Aufbau eines Diffusors 16, 17 wird in der Figur 2 im Detail gezeigt und näher beschrieben.

Im Folgenden soll nunmehr die Ausgestaltung des Druckentlastungskanales 12b im zweiten Schaltschrank 4 beschrieben werden. Der zweite Schaltschrank 4 weist eine im Wesentlichen ebene Wandung 20 auf, welche dem Kapselungsgehäuse 2 zugewandt ist. Durch die ebene Wandung 20 ragt die Anformung mit der Anschlussfläche 5b in den Elektroraum des zweiten Schaltschrankes 4. Beabstandet zu den an der Anschlussfläche 5b befidlichen Kabelsteckern 8, Kabeln 7, Steckverbindern 6 ist eine Durchtrittsöffnung 21 in die im Wesentlichen ebene Wandung 20 eingebracht. Dadurch wird die Möglichkeit gegeben, ein Umlenkknie 22 außenseitig an der ebenen Wandung 20, also dem Kapselungsgehäuse 2 zugewandt, zu positionieren. Dadurch ist es möglich, den Strömungsweg des Druckentlastungskanales 12b zu verlängern. Innerhalb des Umlenkknies 22 erfolgt eine Umlenkung des aus der Durchtrittsöffnung 21 austretenden Fluidstromes um 90°, so dass aus dem Druckentlastungskanal 12b ein Austreten in eine vertikale Richtung ermöglicht ist. Ähnlich der Anordnung zweier Diffusoren 16, 17 im ersten Druckentlastungskanal 12a sind im zweiten Druckentlastungskanal 12b ein erster Diffusor 16a sowie ein zweiter Diffusor 17a angeordnet. Die beiden Diffusoren 16a, 17a im zweiten Druckentlastungskanal 12b sind analog zu den ersten und zweiten Diffusoren 16, 17 im ersten Druckentlastungskanal 12a aufgebaut. Die Diffusoren 16a, 17a des zweiten Druckentlastungskanales 12b sind dabei derart angeordnet, dass der zweite Diffusor 17a mit seiner Grundplatte 18 einen Abschluss (Druckentlastungsöffnung 13) des Druckentlastungskanales 12b des zweiten Schaltschrankes 4 bildet. Die Grundplatte 18 mit entsprechenden ersten Öffnungen 24 begrenzen den Druckentlastungskanal 12b des zweiten Schaltschrankes 4 gegenüber der Umgebung. Der erste Diffusor 16a des Druckentlastungskanales 12 des zweiten Schaltschrankes 4 ist im Verlauf des Umlencknies 22 angeordnet, wobei dieser im Wesentlichen quer, insbesondere im Wesentlichen lotrecht zur gewünschten Umlenkung des Fluidstromes 15 innerhalb des Umlenkknies 22 ausgerichtet ist. Damit ist bevorzugt eine Situation geschaffen, in welcher sowohl der erste Diffusor 16a als auch der zweite Diffusor 17a des Druckentlastungskanales 12b des zweiten Schaltschrankes 4 im Wesentlichen lotrecht von dem Fluidstrom 15 durchsetzt sind. Dadurch wird ein widerstandsarmes Umlenken des Fluidstromes 15 innerhalb des Umlenkknies 22 durch die Lage von erstem und zweitem Diffusor 16a, 17a unterstützt.

Die ersten und zweiten Diffusoren 16, 16a, 17, 17a, wie in den Figuren 1 in ihren Einbaulagen gezeigt, sind jeweils gleichartig ausgeführt. Lediglich die Ausrichtung und Lage innerhalb des jeweiligen Druckentlastungskanales 12a, 12b variieren. Im Folgenden soll anhand der Figur 2 der grundsätzliche Aufbau eines Diffusors 16, 16a, 17, 17a beschrieben werden. Die Figur 2 zeigt eine Perspektive eines Diffusors 16, 16a, 17, 17a. Der Diffusor 16, 16a, 17, 17a weist eine Grundplatte 18 auf. Die Grundplatte 18 ist im Wesentlichen eben ausgebildet und im Randbereich mit Abkantungen 23 versehen. Durch die Winkellage der Abkantungen 23 kann eine Anpassung hinsichtlich der Lage des Diffusors 16, 16a, 17, 17a innerhalb eines Druckentlastunskanales 12a, 12b vorgegeben werden. Je nach Biegewinkel kann eine mehr oder weniger starke Querausrichtung der im Wesentlichen ebenen Grundplatte 18 zu einer Durchtrittsrichtung eines Fluidstromes 15 erfolgen.

Die Grundplatte 18 weist eine Vielzahl von ersten Öffnungen 24 auf. Die ersten Öffnungen 24 sind vorliegend in mehreren parallelen Reihen angeordnet, wobei zwischen den ersten Öffnungen 24 benachbarter Reihen jeweils ein Versatz in der Lage der ersten Öffnungen 24 zueinander vorgesehen ist. Bei Nutzung von kreisrunden Querschnitten für die ersten Öffnungen 24, wie in der Figur 2 gezeigt, bietet sich ein Versatz um etwa einen halben Durchmesser der jeweiligen ersten Öffnungen 24 an. Bedarfsweise kann jedoch auch vorgesehen sein, dass die ersten Öffnungen 24 verschiedene Querschnittsformen und verschiedene Querschnittsflächen aufweisen. Beispielsweise kann die Grundplatte 18 auch durch eine Vielzahl von miteinander verbundenen Streifen gebildet sein, so dass rechteckige erste Öffnungen 24, quadratische, rautenförmige oder beliebige andere Querschnitte usw. hervorgerufen werden.

In Durchtrittsrichtung vor der Grundplatte 18 ist ein Maschenwerk 19 angeordnet. Das Maschenwerk 19 weist eine Vielzahl von zweiten Öffnungen 25 auf, wobei der Querschnitt der zweiten Öffnungen 25 jeweils kleiner ist als der Querschnitt einer ersten Öffnung 24. Dadurch besteht die Möglichkeit, dass eine erste Öffnung 24 von mehreren zweiten Öffnungen 25 überspannt ist. Dadurch wird ein Kühlen und Verwirbeln eines hindurchströmenden Fluides unterstützt. Vorliegend ist das Maschenwerk 19 als so genanntes Streckmetall ausgeformt. D. h. durch ein Stanzen und Ziehen wird aus einer ebenen Platte ein Maschenwerk 19 geschaffen, wobei aufgrund des Streckprozesses ein Verkanten der ursprünglich ebenen Abschnitte der Platte erzielt wird. Dadurch wird eine zusätzliche Verwirbelung an den Kanten der zweiten Öffnungen 25 erzielt. Bevorzugt können die zweiten Öffnungen 25 rautenförmige Querschnitte aufweisen. Um die Verwirbelung zusätzlich zu unterstützen, ist das Maschenwerk 19, welches bevorzugt eigenstabil ausgeformt ist, mit einer Prägung versehen. Vorliegend ist eine symmetrische Sägezahnprägung gewählt, so dass viele pultartig zur Grundplatte 18 liegende Zonen gebildet sind, in welchen jeweils die zweiten Öffnungen 25 liegen. Dadurch sind mehrere Kavitäten zwischen der Grundplatte 18 und der jeweiligen Sägezähne des profilierten Maschenwerkes 19 gebildet. Das Maschenwerk 19 ist punktuell mit der Grundplatte 18 verbunden. Dadurch kann die Grundplatte 18 das Maschenwerk 19 stabilisieren. Der in der Figur 2 gezeigte Diffusor 16, 16a, 17, 17a kann in seinen Dimensionen verändert werden, so dass dieser in geeigneter Form eine Barriere im Verlauf eines Druckentlastungskanales 12a, 12b bildet. Neben einer Variation von Größe und Form der ersten bzw. zweiten Öffnungen 24, 25 kann auch die Profilierung des Maschenwerkes 19 sowie der sich darunter aufspannenden bzw. begrenzten Kavität variieren. Beispielsweise kann eine sphärisch gewölbte Kavität, eine gewellte Kavität, eine sinusförmige Kavität usw. genutzt werden.

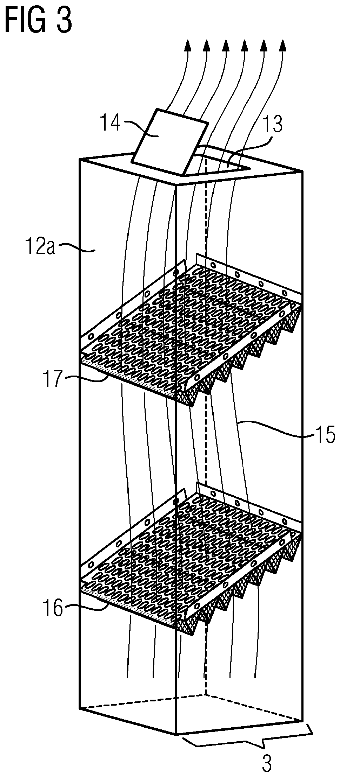

Die Figur 3 zeigt eine schematisierte Darstellung des ersten Schaltschrankes 3. Schematisch gezeigt ist die Lage des Fluidstromes 15, welcher im Wesentlichen in einer vertikalen Verlaufend den ersten Diffusor 16 sowie den zweiten Diffusor 17 des Druckentlastungskanales 12a des ersten Schaltschrankes 3 passiert. Durch eine Druckdifferenz ist die Klappe 14 geöffnet, so dass die Druckentlastungsöffnung 13 freigegeben ist und der Fluidstrom ausgehend von beispielsweise (in der Figur 3 nicht dargestellt) gestörten Kabeln 7 nach Passage des ersten sowie zweiten Diffusors 16, 17 in die Umgebung des ersten Schaltschrankes 3 austritt. Dabei lenkt die Klappe 14 den Fluidstrom 15 nach einem Verlassen des Druckentlastungskanals 12a des ersten Schaltschrankes 3 ab.

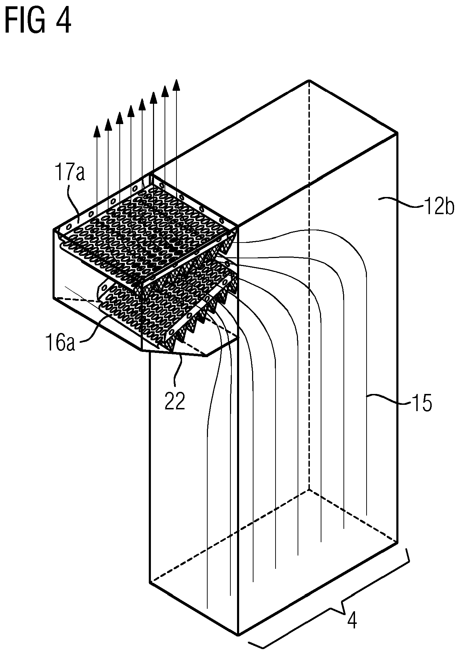

Die Figur 4 zeigt schematisch den zweiten Schaltschrank 4, in welchem im Bereich der Kabel 7 (in Figur 4 nicht dargestellt) ein Fehler auftritt, welcher bspw. zu einer Lichtbogenerscheinung und daraus folgend zu einer Expansion von Gas und Partikeln führt. Der entsprechende Fluidstrom 15 wird von den Kabeln 7, zunächst in einer vertikalen Richtung abgeleitet, um darauf folgend die Durchtrittsöffnung passierend in das Umlenkknie 22 eingeleitet zu werden. Innerhalb des Umlencknies 22 unterstützt der erste Diffusor 16a des Druckentlastungskanales 12b des zweiten Schaltschrankes 4 die Umlenkung des Fluidstromes 15, woraufhin der zweite Diffusor 17a passiert wird und nach einer Passage des zweiten Diffusors 17a der Fluidstrom im Wesentlichen in einer vertikalen Richtung aus dem Druckentlastungskanal 12b des zweiten Schaltschrankes 4 austritt.

Im Vergleich der Figuren 3 und 4 ist zu erkennen, dass die Diffusoren 16, 17 des Druckentlastungskanals 12a des ersten Schaltschrankes 3 mit der jeweiligen Grundplatte 18 im Wesentlichen quer zum Fluidstrom 15, jedoch dabei verkippt ausgerichtet sind. Dabei ist die Schräglage der Grundplatte 18 derart gewählt, dass eine Pultfläche der Sägezahnprägung des Maschenwerkes 19 nahezu parallel zur Durchtrittsrichtung des Fluidstromes 15 ausgerichtet ist. Somit ist eine erste Gruppe von zweiten Öffnungen 25 gebildet, welche im Wesentlichen quer zur Durchtrittsrichtung des Fluidstromes ausgerichtet ist, sowie eine zweite Gruppe von zweiten Öffnungen gebildet, die im Wesentlichen parallel zur Durchtrittsrichtung des Fluidstromes 15 ausgerichtet ist.

Im Gegensatz dazu ist bei der Anordnung vom ersten und zweiten Diffusor 16a, 17a im Druckentlastungskanal 12b des zweiten Schaltschrankes 4 vorgesehen, dass die Grundplatten 18 jeweils im Wesentlichen lotrecht von dem Fluidstrom 15 durchsetzt sind. Dadurch ist bei einer symmetrischen Ausgestaltung des Sägezahnes und der sich so ergebenden Pultflächen eine nahezu gleichartige Anordnung der jeweils in den Pultflächen liegenden zweiten Öffnungen 25 im Bezug auf die Durchtrittsrichtung des Fluidstromes 15 gegeben.

## Patentansprüche

1. Schaltschrank (3, 4) mit einem Druckentlastungskanal (12a, 12b) zur Abführung eines Fluidstromes (15) sowie mit einem im Druckentlastungskanal (12a, 12b) angeordneten Diffusor (16, 16a, 17, 17a), wobei
der Diffusor (16, 16, 17, 17a) eine mechanisch stabilisierende Grundplatte (18) mit mehreren ersten Öffnungen (24) aufweist, welche von einem Maschenwerk (19) mit mehreren zweiten Öffnungen (25) überdeckt sind,
wobei eine erste Gruppe von zweiten Öffnungen (25) im Wesentlichen quer und eine zweite Gruppe von zweiten Öffnungen (25) im Wesentlichen parallel in Durchtrittsrichtung des Diffusors (16, 16a, 17, 17a) angeordnet sind.

2. Schaltschrank (3, 4) nach Anspruch 1, wobei in Durchtrittsrichtung des Diffusors (16, 16a, 17, 17a) die zweiten Öffnungen (25) vor den ersten Öffnungen (24) liegen.

3. Schaltschrank (3, 4) nach Anspruch 1 oder Anspruch 2, wobei das Maschenwerk (19) zumindest eine Kavität über der Grundplatte (18) begrenzend geprägt ist.

4. Schaltschrank (3, 4) nach Anspruch 3, wobei die Prägung eine Sägezahnprägung ist.

5. Schaltschrank (3, 4) nach einem der Ansprüche 1 bis 4, wobei die Grundplatte (18) im Wesentlichen schräg zur Durchtrittsrichtung angeordnet ist.

6. Schaltschrank (3, 4) nach einem der Ansprüche 1 bis 5, wobei der Diffusor (16, 16a, 17, 17a), eine Richtungsänderung des Fluidstromes (15) unterstützend, in einem Umlenkknie (22) angeordnet ist.

7. Schaltschrank (3, 4) nach einem der Ansprüche 1 bis 6, wobei zumindest ein Diffusor (16, 16a, 17, 17a) in einem Abschnitt eines Druckentlastungskanals (12a, 12b) angeordnet ist, der nach Art eines Erkers an einen Schaltschrank (3, 4) angesetzt ist.

8. Schaltschrank (3, 4) nach einem der Ansprüche 1 bis 7, wobei eine Druckentlastungsöffnung (13) des Druckentlastungskanals (12a, 12b) den Fluidstrom (15) in eine Vertikale lenkt.

## Claims

1. Switchgear cabinet (3, 4) having a pressure-relief channel (12a, 12b) for discharging a fluid stream (15) and having a diffuser (16, 16a, 17, 17a) which is arranged in the pressure-relief channel (12a, 12b), wherein
the diffuser (16, 16, 17, 17a) has a mechanically stabilizing base plate (18) having multiple first openings (24) which are covered by a meshwork (19) having multiple second openings (25), wherein
a first group of second openings (25) is arranged substantially transversely, and a second group of second openings (25) is arranged substantially parallel, in the direction of passage of the diffuser (16, 16a, 17, 17a).

2. Switchgear cabinet (3, 4) according to Claim 1,
wherein
the second openings (25) are situated in front of the first openings (24) in the direction of passage of the diffuser (16, 16a, 17, 17a).

3. Switchgear cabinet (3, 4) according to Claim 1 or Claim 2,
wherein
the meshwork (19) is embossed so as to delimit at least one cavity over the base plate (18).

4. Switchgear cabinet (3, 4) according to Claim 3,
wherein
the embossment is a sawtooth embossment.

5. Switchgear cabinet (3, 4) according to one of Claims 1 to 4,
wherein
the base plate (18) is arranged substantially inclined to the direction of passage.

6. Switchgear cabinet (3, 4) according to one of Claims 1 to 5,
wherein
the diffuser (16, 16a, 17, 17a) is arranged in a diverting knee (22) so as to assist a change in direction of the fluid stream (15).

7. Switchgear cabinet (3, 4) according to one of Claims 1 to 6,
wherein
at least one diffuser (16, 16a, 17, 17a) is arranged in a section of a pressure-relief channel (12a, 12b) that is attached in the manner of an oriel to a switchgear cabinet (3, 4) .

8. Switchgear cabinet (3, 4) according to one of Claims 1 to 7,
wherein
a pressure-relief opening (13) of the pressure-relief channel (12a, 12b) directs the fluid stream (15) into a vertical direction.

## Revendications

1. Armoire (3, 4) de distribution comprenant un conduit (12a, 12b) de détente de la pression pour l'évacuation d'un courant (15) de fluide, ainsi qu'un diffuseur (16, 16a, 17, 17a) monté dans le conduit (12a, 12b) de détente de la pression, dans laquelle
le diffuseur (16, 16a, 17, 17a) a une plaque (18) de base stabilisante mécaniquement et ayant plusieurs premières ouvertures (24), qui sont recouvertes d'un ouvrage (19) maillé ayant plusieurs deuxièmes ouvertures (25),
dans laquelle un premier groupe de deuxièmes ouvertures (25) sont disposées sensiblement transversalement et un deuxième groupe de deuxièmes ouvertures (25) sensiblement parallèlement au sens de traversée du diffuseur (16, 16a, 17, 17a).

2. Armoire (3, 4) de distribution suivant la revendication 1, dans laquelle, dans le sens de traversée du diffuseur (16, 16a, 17, 17a), les deuxièmes ouvertures (25) sont avant les premières ouvertures (24) .

3. Armoire (3, 4) de distribution suivant la revendication 1 ou revendication 2,
dans laquelle l'ouvrage (19) maillé est estampé en délimitant au moins une cavité sur la plaque (18) de base.

4. Armoire (3, 4) de distribution suivant la revendication 3, dans laquelle l'estampage est un estampage en dents de scie.

5. Armoire (3, 4) de distribution suivant l'une des revendications 1 à 4,
dans laquelle la plaque (18) de base est disposée en étant sensiblement inclinée par rapport au sens de traversée.

6. Armoire (3, 4) de distribution suivant l'une des revendications 1 à 5,
dans laquelle le diffuseur (16, 16a, 17, 17a) est monté dans un coude (22) de déviation venant à l'appui d'un changement de direction du courant (15) de fluide.

7. Armoire (3, 4) de distribution suivant l'une des revendications 1 à 6,
dans laquelle au moins un diffuseur (16, 16a, 17, 17a) est monté dans un tronçon du conduit (12a, 12b) de détente de la pression, qui est ajouté à la manière d'un encorbellement sur une armoire (3, 4) de distribution.

8. Armoire (3, 4) de distribution suivant l'une des revendications 1 à 7,
dans laquelle une ouverture (13) de détente de la pression du canal (12a, 12b) de détente de la pression conduit le courant (15) de fluide suivant une verticale.
